# EUROPÄISCHE PATENTSCHRIFT

(11) **EP 2 313 665 B1**
(45) Veröffentlichungstag und Bekanntmachung des Hinweises auf die Patenterteilung: **27.11.2013**
(21) Anmeldenummer: 09776026.8
(22) Anmeldetag: 27.07.2009
(51) Int. Cl.: F16D 11/16

(54) **Verfahren zum Einbau einer Drehmomentübertragungseinrichtung in einem Antriebsstrang eines Fahrzeuges**
Method of mounting a torque transmission device in the drive train of a vehicle
Procédé d'installation d'un dispositif de transmission de couple dans une chaîne cinématique d'un véhicule

(30) Priorität: 07.08.2008 DE 102008036740
(43) Veröffentlichungstag der Anmeldung: 27.04.2011
(73) Patentinhaber: Schaeffler Technologies AG & Co. KG, 91074 Herzogenaurach (DE)
(72) Erfinder: ADOLPH, Marcus, 71686 Remseck (DE); DUSSEL, Klaus, 76199 Karksruhe (DE); WOLF, Bernhard, 76534 Baden-Baden (DE)
(86) Internationale Anmeldenummer: PCT/DE2009/001055
(87) Internationale Veröffentlichungsnummer: WO 2010/015228

(56) Entgegenhaltungen:
- EP-A- 1 933 032
- DE-A1-102006 017 711
- US-A- 4 667 799
- US-A- 5 699 890
- US-A1- 2007 193 843
- US-A1- 2007 199 787

## Beschreibung

Die vorliegende Erfindung betrifft ein Verfahren zum Einbau einer Drehmomentübertragungseinrichtung in einen Antriebsstrang eines Fahrzeuges.

Beispiele derartiger Drehmomentübertragungseinrichtungen sind beispielsweise Kupplungen, wie Reibungskupplungen, Lamellenkupplungen, Wendesatzkupplungen oder Sicherheitskupplungen, Drehmomentwandler mit Wandlerüberbrückungskupplungen sowie Bremsaggregate.

Bei Herstellung derartiger Drehmomentübertragungseinrichtungen, beispielsweise bei trockenen Doppelkupplungen, wurden teilweise auch im Neuzustand nicht ausreichende Momentenübertragungskapazitäten festgestellt.

Es ist daher eine Aufgabe der vorliegenden Erfindung ein Verfahren zur Montage einer Drehmomentübertragungseinrichtung in einem Antriebsstrang eines Fahrzeuges anzugeben, wobei der Antriebsstrang bei kosteneffizienter Fertigung eine ausreichende Momentenkapazität aufweist.

Diese Aufgabe wird erfindungsgemäß gelöst durch ein verfahren mit den Merkmalen des Patentanspruches 1.

Bevorzugte Ausführungsformen der erfindungsgemäßen Drehmomentübertragungseinrichtung sind in den abhängigen Ansprüchen angegeben.

Bevorzugte Ausführungsformen dieses erfindungsgemäßen Verfahrens sind in den abhängigen Patenansprüchen angegeben.

Die vorliegende Erfindung wird nachfolgend an Hand bevorzugter Ausführungsbeispiele in Verbindung mit den zugehörigen Figuren näher erläutert. In diesen zeigen:
Figur 1 eine schematische Darstellung des Aufbaus eines Antriebstranges eines Fahrzeuges mit einer trockenen Doppelkupplung als einem Beispiel einer möglichen Drehmomentübertragungseinrichtung,
Figur 2 eine schematische Darstellung des Aufbaus einer Doppelkupplung als einem Ausführungsbeispiel einer Drehmomentübertragungseinrichtung,
Figur 3 eine schematische Darstellung des Drehmomentenaufbaus allgemein einer Kupplung über deren Einrückweg,
Figur 4eine schematische Darstellung des Aufbaus eines weiteren Ausführungsbeispieles einer trockenen Doppelkupplung als Schnittbild zusammen mit einem Einrücksystem mit einem Ausgleichselement (Einstellscheibe) und
Figur 5 eine Prinzip-Darstellung des Einstellvorganges mit einer Größenabstufung der möglichen Ausgleichselementstärken.

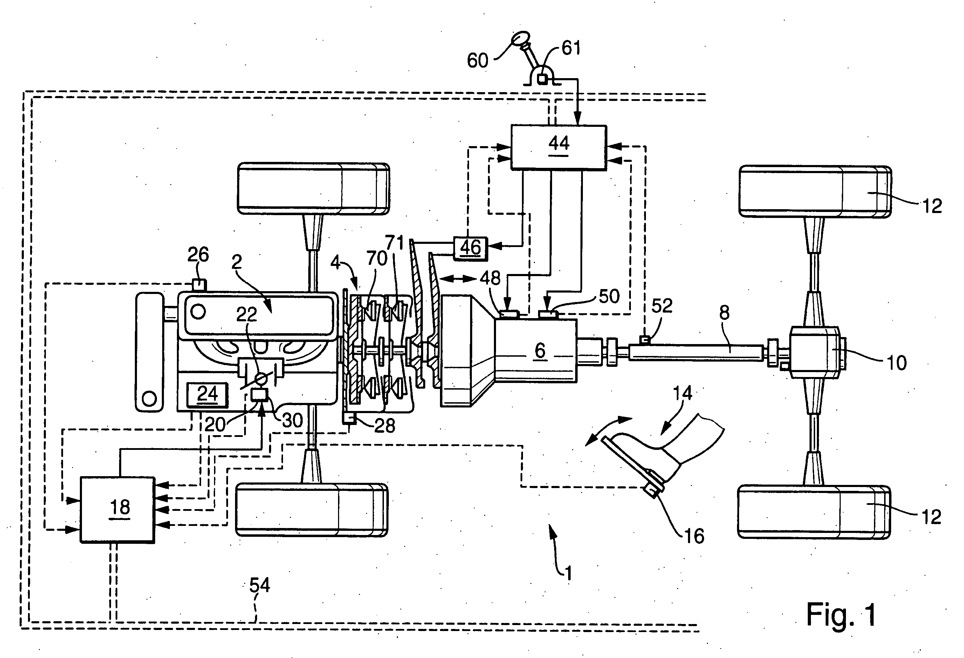

Figur 1 zeigt schematisch einen Antriebsstrang 1 eines Kraftfahrzeuges, der einen als Verbrennungsmotor ausgebildeten Antriebsmotor 2, ein Doppelkupplungsaggregat 4 und ein Getriebe 6 umfasst. Über eine Kardanwelle 8 und ein Differenzialgetriebe 10 werden zumindest die Hinterräder 12 des Fahrzeuges angetrieben. Sinngemäß kann es sich selbstverständlich auch um ein Fahrzeug mit einer oder mehreren angetriebenen Achsen handeln.

Die Doppelkupplung 4 ist dabei derart zwischen Antriebsmotor 2 und Getriebe 6 angeordnet, dass eine erste Eingangswelle des Getriebes mit einer ersten Kupplungsscheibe und eine zweite Eingangswelle des Getriebes mit einer zweiten Kupplungsscheibe verbunden sind, wobei der Ausrückzustand dieser Kupplungsscheiben jeweils unabhängig voneinander vermittels der Betätigungshebel veränderbar ist.

Die Kupplungen 70, 71 sind mittels einer Aktorik 46 automatisiert betätigbar, wobei die Kupplungen 70, 71 voneinander unabhängig betätigt werden können. Die Aktorik 46 umfasst zwei Betätigungshebel, welche jeweils unabhängig voneinander auf entsprechende Ausrücklager oder Einrücklager wirken, abhängig davon, ob die jeweilige Kupplung im Grundzustand offen oder geschlossen ist. Die Ausrücklager bzw. Einrücklager wirken vorliegend jeweils unabhängig voneinander auf jeweils eine Tellerfeder oder ein Tellerfederpaket.

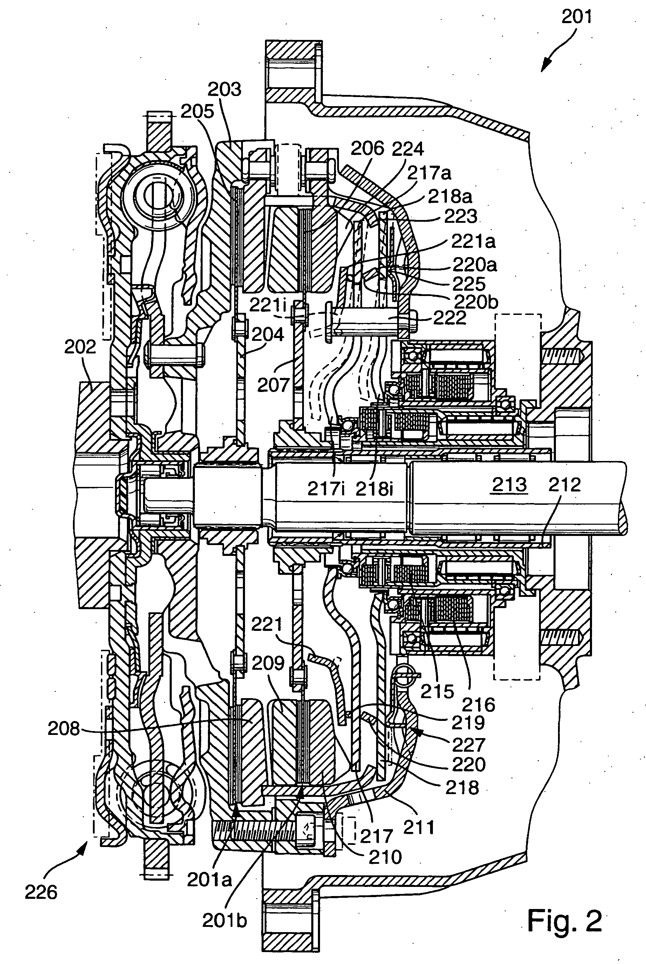

Vorliegend sind (wie nachfolgend noch ausführlich erläutert) beide Kupplungen des Doppelkupplungsgetriebes im Grundzustand offen. Alternativ kann eine der Kupplungen oder können beide Kupplungen aber auch im Grundzustand geschlossen sein (wie in Figur 2 dargestellt und nachfolgend erläutert). Sinngemäß handelt es sich dann um ein oder zwei Ausrücklager, wenn eine oder mehrere der Kupplungen des Doppelkupplungsgetriebes im Normalzustand geschlossen sind.

In Figur 2 ist ein weiteres Ausführungsbeispiel einer Doppelkupplung 201 mit Verschleißnachstellung und zentralem hydraulisch betätigtem Ausrückelement angegeben, welches zwei Reibungskupplungen 201a und 201b umfasst, wobei die Kupplungen im Grundzustand geschlossen sind, wie nachfolgend noch ausführlich dargestellt.

Die Reibungskupplung 201 a besitzt bei dem dargestellten Ausführungsbeispiel nach Figur 2 eine Kupplungsscheibe 204, die mit einer Getriebeeingangswelle 213 verbunden und mit einer Abtriebswelle 202 eines Motors, wie insbesondere einer Brennkraftmaschine antriebsmäßig verbindbar ist. Die Reibungskupplung 201 b besitzt eine Kupplungsscheibe 207, die mit Getriebeeingangswelle 212 verbunden und mit der Abtriebeswelle 202 eines Motors, wie insbesondere einer Brennkraftmaschine antriebsmäßig verbindbar ist. Die Kupplungsscheibe 204 ist mit ihren Reibbelägen 205 axial zwischen einer Druckplatte 203 und einer Anpreßplatte 208 angeordnet, die Kupplungsscheibe 207 ist mit ihren Reibbelägen 206 axial zwischen einer Druckplatte 209 und einer Anpreßplatte 210 angeordnet. Die Druckplatten 203 und 209 sind axial- und drehfest mit der Abtriebswelle 202 des Motors verbunden. Die Anpreßplatten 208 und 210 sind drehfest, jedoch axial über einen gewissen Bereich bewegbar mit dem Kupplungsdeckel 211, der ebenfalls mit der Abtriebswelle 202 des Motors verbunden ist, verbunden. Die Verbindung der Druckplatten 203, 209 mit Abtriebswelle 202 des Motors erfolgt im vorliegenden Ausführungsbeispiel beispielsweise über ein eine Trägheitsmasse bildendes Bauteil 226, welches beispielsweise zwei federnd und gedämpft miteinander verbundene Trägheitsmassen umfassen kann. Zur Verbindung der Abtriebswelle 202 des Motors mit der Getriebeeingangswelle 213 eines hier nicht näher dargestellten Getriebes ist die Kupplungsscheibe 204 mit ihren Reibbelägen 205 durch eine axiale Verlagerung der Anpreßplatte 208 zwischen der Druckplatte 203 und der Anpreßplatte 208 axial einspannbar, wobei mit zunehmender Einspannung eine zunehmende Reibung und somit eine zunehmende Mitnahme zwischen den Platten 203, 208 und den Reibbelägen 205 der Kupplungsscheibe 204 auftritt. Die Kupplungsscheibe 207 ist mit ihren Reibbelägen 206 durch ein axiale Verlagerung der Anpreßplatte 210 zwischen der Druckplatte 209 und der Anpreßplatte 210 einspannbar, um eine Verbindung zwischen der Abtriebswelle 202 des Motors und der Getriebeeingangswelle 212 herzustellen, wobei mit zunehmender Einspannung eine zunehmende Reibung und somit eine zunehmende Mitnahme zwischen den Platten 209, 210 und den Reibbelägen 205 der Kupplungsscheibe 204 auftritt.

Die Betätigung der Kupplung 201 a durch eine axiale Verlagerung der Anpreßplatte 208 erfolgt mittels eines Antriebes 216, der über ein Betätigungselement, das vorliegend durch eine Tellerfeder 218 gebildet ist, eine axiale Bewegung der Anpreßplatte 208 bewirkt. Der Antrieb 216 greift hierbei an radial innen liegenden Bereichen 218i der Tellerfeder 218 über ein Ausrücklager an. Die Tellerfeder 218 stützt sich an einem Bereich 220a eines ringförmigen Distanzelementes 220 ab, der gleichzeitig als Drehpunkt wirkt, um den die Tellerfeder 218 bei einer Betätigung verschwenkbar ist. Über radial äußere Bereiche 218a erfolgt über ein Zwischenelement 223, die Betätigung der Anpreßplatte 208 und somit der Kupplung 201a. Die Tellerfeder 218 wird auf der dem Bereich 220a des ringförmigen Distanzelementes 220 axial gegenüberliegendem Bereich durch Auflagen 225 einer Nachstelleinrichtung 227 abgestützt. Die Tellerfeder 218 beaufschlagt die Anpreßplatte 208 im Grundzustand im Sinne einer Einrückung; durch eine Betätigung mittels des Antriebes 216 wird, entgegen der Tellerfederkraft, eine axiale Bewegung der Anpreßplatte 208 möglich und somit ein Ausrücken der Kupplung 201a bewirkt.

Die Betätigung der Kupplung 201 b erfolgt mittels des Antriebes. 215. Die Bewegung des Antriebes 215 wird über eine als Tellerfeder 217 ausgebildete Betätigungseinrichtung auf die axial bewegliche Anpreßplatte 210 übertragen. Hierbei stützt sich die Tellerfeder 217 an einem ringförmigen Zwischenelement 219 ab. Die Gegenauflage auf der axial gegenüberliegenden Seite der Tellerfeder 217 wird durch den Bereich 220b des ringförmigen Distanzelementes 220 gebildet. Der Antriebe 215 greift an radial innen liegenden Breichen 217i der Tellerfeder 217 an. Das ringförmige Zwischenelement 219 bildet einen Drehpunkt, um den die Tellerfeder 217 bei einer Betätigung verschwenkbar ist. Radial äußere Bereiche 217a der Tellerfederfeder 217 liegen an Auflagebereichen 224 der Anpreßplatte 210 an. Die Tellerfeder 217 beaufschlagt die Anpreßplatte 210 im Grundzustand der Kupplung im Sinne einer Einrückung; durch eine Betätigung mittels des Antriebes 215 wird, entgegen der Tellerfederkraft eine axiale Bewegung der Anpreßplatte 210 möglich und somit ein Ausrücken der Kupplung 201 b bewirkt.

In den in den Figuren 1 und 2 gezeigten Anordnungen befinden sich die jeweiligen Druckplatten in deren Null-Lage, d.h. in ihrer durch die Konstruktion definierten Einbaulagen. Wird beispielsweise das in Fig. 2 gezeigte und der Tellerfeder 218 zugeordnete Ausrücklager durch den Antrieb 216 gemäß Zeichnung nach links bewegt, so wird die Kupplung 201a ausgerückt. Wird das der Tellerfeder 217 zugeordnete Ausrücklager durch den Antrieb 215 gemäß Zeichnung nach rechts bewegt, so wird die Kupplung 201b ausgerückt.

Im Rahmen der vorliegenden Erfindung wird derjenige Betätigungsweg, der bei einer im Grundzustand geschlossenen Kupplung bis zum Beginn eines Momentenabbaus bei diesem Ausrückvorgang von der Betätigungsvorrichtung zurückgelegt wird, als "negativer" Lüftweg der Kupplung bezeichnet. Hierbei kann als Betätigungsvorrichtung z. B. ein Ausrücklager, eine Tellerfeder einer Reibungskupplung oder die Druckplatte selbst verstanden werden.

Alternativ kann auch eine oder können beide Kupplungen im Grundzustand offen ausgebildet sein, wie dies im Ausführungsbeispiel nach Fig. 1 der Fall ist. In diesem Fall werden die Druckplatten von den zugeordneten Tellerfedern in den geöffneten Zustand vorbelastet und über Einrücklager werden die Tellerfedern entgegen dieser Vorbelastung zum eingerückten Zustand hin belastet.

Im Rahmen der vorliegenden Erfindung wird derjenige Betätigungsweg, der bis zum Beginn eines Momentenaufbaues bei diesem Einrückvorgang von der Betätigungsvorrichtung zurückgelegt werden muss, als "positiver" Lüftweg der Kupplung bezeichnet. Hierbei kann als Betätigungsvorrichtung z. B. ein Ausrücklager, eine Tellerfeder einer Reibungskupplung oder die Druckplatte selbst verstanden werden.

Die Definition eines Lüftweges trifft also sinngemäß sowohl bei Einrücklagern als auch bei Ausrücklagern zu. Nachfolgend wird aus Vereinfachungsgründen nur noch allgemein auf den Begriff Lüftweg Bezug genommen und die Erfindung in Bezug auf im Grundzustand offene Kupplungen diskutiert, als ausschließlich beispielhafte und nicht einschränkende Darstellung der Erfindung.

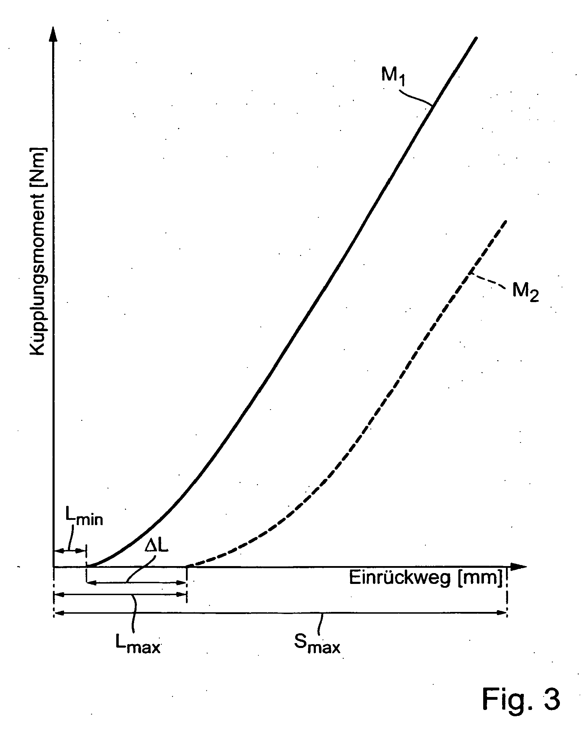

Mit größer werdendem Lüftweg einer im Grundzustand offenen Kupplung sinkt jedoch eine Momentenübertragungsfähigkeit der Kupplung, da vom tatsächlich vorhandenen maximalen Betätigungsweg nur noch ein geringerer Teil zur Verfügung steht. Dieser Zusammenhang ist auch Figur 3 entnehmbar.

In Fig. 3 ist das Kupplungsmoment über dem Einrückweg der Kupplung dargestellt als Kurve M1 für einen minimalen Lüftweg Lmin und als Kurve M2 für einen maximalen Lüftweg Lmax. Der minimale Lüftweg wird in der Konstruktion festgelegt und beschreibt den Mindestweg des Einrücksystems bis zu dem noch kein Kupplungsmoment aufgebaut werden soll. Der maximale Lüftweg wird ebenfalls in der Konstruktion festgelegt und beschreibt den Maximalweg des Einrücksystems ab dem auf jeden Fall eine Momentenübertragung beginnen soll. Je näher ein tatsächlicher Lüftweg an den maximalen Lüftweg sich annähert, desto kürzer wird der verbleibende Betätigungsweg Smax. Somit wird dann der insgesamt verfügbare Betätigungsweg nicht mehr optimal genutzt. Zwar wird eine Kupplung im Neuzustand mit einem tatsächlichen Lüftweg im Intervall zwischen Lmin und Lmax akzeptiert, da aus wirtschaftlichen Gründen eine weitere Einengung der Lüftwegtoleranzen (über die Bauteiltoleranzen) nicht wünschenswert ist. Allerdings kann dann der Zustand eintreten, daß im Kupplungsneuzustand eine nicht ausreichende Momentenübertragungskapazität auftritt.

Es ist daher wünschenswert, ein Verfahren zum Einbau einer solchen Drehmomentübertragungseinrichtung in einem Antriebsstrang eines Fahrzeuges anzugeben, bei dem Lüftwegtoleranzen der Drehmomentübertragungseinrichtung in einem Getriebe des Fahrzeuges ausgeglichen werden können.

Den Figuren 1 und 2 ist weiterhin entnehmbar, dass eine Baugruppe der Doppelkupplung mit dem Getriebe (-Gehäuse) und eine weitere Baugruppe der Doppelkupplung mit der Motorseite (insbesondere mit der Kurbelwelle) verbunden sind. Die Kupplung muss entsprechend die Toleranzen zwischen Motor und Getriebe, sowie die Toleranzen der Bauteile der Kupplung selbst ausgleichen.

Für ein Einstellen eines definierten Betriebspunktes bzw. einer definierten Einbaulage der Kupplung könnten durch Vermessung von Getriebe -und Betätigungssystemtoleranzen- entsprechende Einstellscheiben zum Ausgleich der Toleranzen gewählt werden. Diese Einstellscheiben könnten dann zwischen Betätigungssystem und Kupplungszungen der Tellerfeder platziert werden. Somit würde unabhängig von der Kupplung selbst eine geometrisch definierte Einbaulage ermittelt und über die Einstellscheiben eingestellt.

Diese Lösung verallgemeinernd können mittels eines solchen Einlegens eines Ausgleichsmittels bestimmter Stärke (Dicke) Toleranzen von Getriebe und Toleranzen des Betätigungssystems der Kupplung ausgeglichen werden, wobei eine in der Konstruktionsphase definierte Einbaulage der Kupplung ( = nominelle bzw. nominale Einbaulage) mit einem Ist-Zustand der Einbaulage bei erstmaligem Zusammenbau (normalerweise beim Kupplungshersteller) verglichen und ein derart ermittelter Toleranzfehler mittels eines Ausgleichsmittels entsprechender Stärke ausgeglichen wird.

Ursächliches Problem ist, wie bereits dargelegt, die im Neuzustand nicht ausreichende Momentenkapazität der Kupplung. Die Momentenkapazität ist aber unter anderem abhängig vom Lüftweg der Kupplung. Der (positive) Lüftweg ist ein Maß für (d.h. beeinflusst) den Betätigungsweg, der bis zum Beginn des Momentenaufbaus zurückgelegt werden muss. Mit größer werdendem Lüftweg sinkt die Momentenübertragungsfähigkeit der Kupplung, da vom vorhandenen Betätigungsweg nur noch ein geringerer Teil zur Verfügung steht. Somit wird der verfügbare Betätigungsweg nicht optimal genutzt. Aus wirtschaftlichen Gründen ist eine weitere Einengung der Lüftwegtoleranzen jedoch nicht möglich. Erfindungsgemäß ist daher vorgesehen, bei Festlegung der Stärke der Einstellscheiben nicht nur die Toleranzen von Getriebe und Kupplungsbetätigungssystem zu berücksichtigen, sondern außerdem den Lüftweg der Kupplung zugrunde zu legen. Durch Berücksichtigung der Lüftwege der einzelnen (Teil-)Kupplungen können daher auch die Kupplungstoleranzen ausgeglichen werden.

Entsprechend dem Lüftweg der Kupplung wird also die nominal ausgewählte Einstellscheibe (d.h. die in Abhängigkeit der Toleranzen von Getriebe und Kupplungsbetätigungssystem bestimmte Einstellscheibenstärke) nun in ihrer Stärke derart variiert, dass damit der Lüftweg gezielt beeinflusst wird. Somit besteht die Möglichkeit zu große oder zu kleine Lüftwege der Kupplung auf einen gewünschten Lüftweg im Getriebe einzustellen. Damit ist eine Betätigungswegreserve für alle Toleranzlagen der Kupplung gewährleistet, sodass die Momentenübertragungssicherheit im Getriebe steigt. Damit ist dieses gezielte Shimmen ein kupplungsindividueller Prozess.

Mit der vorliegenden Erfindung wird also eine Methodik geschaffen, die in der Lage ist, die Lüftwegtoleranzen der Kupplung im Getriebe auszugleichen.

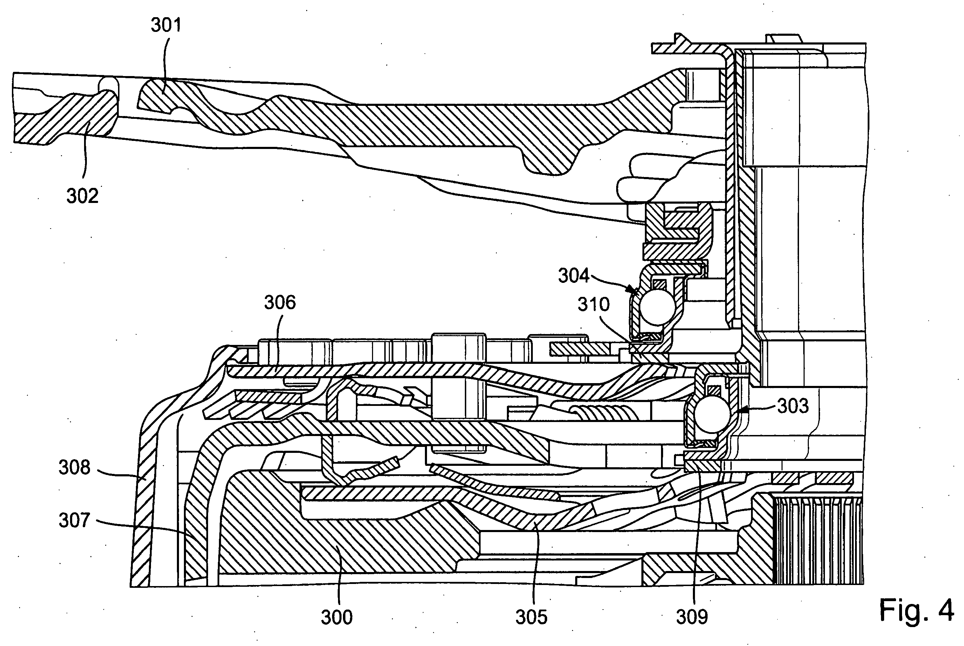

Als Beispiel für diesen Einstellprozeß zeigt Fig. 4 eine Doppelkupplung mit zwei im Grundzustand offenen Reibungskupplungen. Von diesen Reibungskupplungen ist jedoch nur die auf der Seite des Getriebes angeordnete Druckplatte 300 gezeigt, da dieser Ausschnitt genügt, die möglichen (alternativen oder kumulativen) Anordnungsvarianten des Ausgleichselementes (der Einstellscheiben) zu zeigen.

Dabei zeigt Figur 4 neben Betätigungshebel 301,302, Einrücklager 303,304 und Tellerfedern 305,306 als Bestandteile des Einrücksystems. Zudem zeigt Fig. 4 eine mit einem Gehäuse verbundenen Teil 307 an dem sich die Tellerfedern abstützen und einen Zuganker 308 für die nicht dargestellte zweite Druckplatte.

Insbesondere zeigt Figur 4 zwei Einstellscheiben 309,310 bestimmter Dicke als Beispiele von möglichen Ausgleichselementen.

Die Einstellscheibe 309 ist dabei zwischen dem Einrücklager 303 und der Tellerfeder 305 angeordnet. Die weitere Einstellscheibe 310 ist zwischen dem weiteren Einrücklager 304 und der weiteren Tellerfeder 306 angeordnet.

Folglich ist der Lüftweg jeder der Kupplungen der Doppelkupplung unabhängig von der jeweils anderen Kupplung über separate Einstellscheiben 309,310 bzw. über deren Stärke einstellbar.

Alternativ könnten die Einstellscheiben 309,310 auch zwischen den Einrücklagern 303,304 und Schiebemuffen (nicht gezeigt) angeordnet sein, wobei diese Schiebemuffen zwischen den Betätigungshebeln 301,302 und den Einrücklagern 303,304 angeordnet sind. Zudem können die Einstellscheiben auch kumulativ bezogen auf die Einrücklager "vor" und "hinter" den Lagern angeordnet werden. Die Einstellscheibenstärke der einzelnen Einstellscheiben kann dabei gleich oder verschieden sein.

Bei der vorstehend schon beschriebenen herkömmlichen Auswahl einer Stärke der Einstellscheiben gehen zwar auch die Toleranzen des Getriebes und des Betätigungssystems ein, wodurch eine definierte Einbaulage der Kupplung ermöglicht wird. Über diese herkömmliche Auswahl hinaus wird jedoch zum Ausgleich der Kupplungstoleranzen der Parameter Lüftweg beim Wählen der Stärke der Einstellscheiben zusätzlich berücksichtigt. Dadurch wird unter allen Toleranzlagen nicht eine definierte Einbaulage der Kupplung eingestellt, sondern ein definierter Lüftweg der Kupplung im Getriebe durch ein gezieltes Verstimmen der Einbaulage der Kupplung. Damit ist die Stärke der Einstellscheiben nicht nur abhängig von dem Getriebe - und Betätigungssystemtoleranzen-, sondern auch vom Lüftweg der Kupplung selbst.

Mit anderen Worten wird entsprechend dem festgestellten Lüftweg der Kupplung die nominal ausgewählte Einstellscheibe in ihrer Stärke derart variiert, dass damit der Lüftweg gezielt beeinflusst wird. Somit besteht die Möglichkeit, zu große oder zu kleine Lüftwege der Kupplung auf einen gewünschten Lüftweg im Getriebe einzustellen. Damit wird auch die Momentenkapazität im Neuzustand, die abhängig ist vom Lüftweg der Kupplung, eingestellt. Damit ist eine Betätigungswegreserve für alle Toleranzlagen der Kupplung gewährleistet, sodass die Momentenübertragungssicherheit im Getriebe steigt. Der erfindungsgemäße Vorgang (welcher auch als gezieltes Shimmen bezeichnet werden kann) ist ein jeweils kupplungsindividueller Prozess.

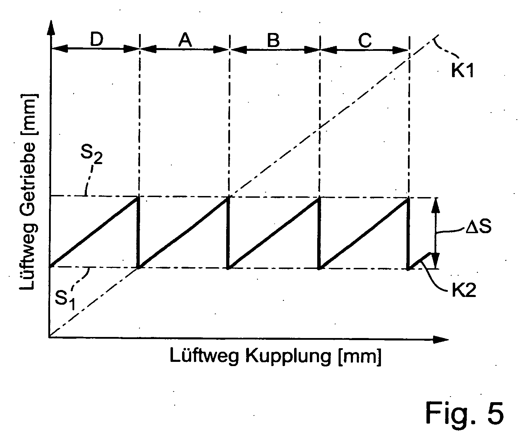

Ausgehend von der Darstellung gemäß Figur 4 ist der weiteren Darstellung gemäß Figur 5 der Lüftweg im Getriebe in Abhängigkeit vom Lüftweg der Kupplung dargestellt. Der Lüftweg im Getriebe ist dabei gleich der Änderung der Stärke der Einstellscheibe (d.h. der "Verstimmung" der nominalen Einbaulage) bezogen auf die Kupplungsübersetzung.

Hierbei ist zu berücksichtigen, dass gemäß einer bevorzugten Ausführungsform die Einstellscheiben in Größenabstufungen vorliegen, und wobei dann der gewünschte Ziel-Lüftweg im Getriebe von den Stärkenabstufungen zwischen den Einstellscheiben abhängig ist. Damit ergibt sich also jeweils ein Ziel-Lüftweg-Bereich.

Dabei zeigt der Bereich A in Fig. 5 eine Einstellscheibe bei der keine Verstimmung der nominellen Einbaulage, d.h. Änderung der Stärke der Einstellscheibe vorgenommen wurde. Bereich D zeigt eine Einstellscheibe bei der eine Verstimmung der nominellen Einbaulage durch Wahl einer Abstufung dünner als die nominelle Einbaulage vorgenommen wurde. Bereich B zeigt eine Einstellscheibe bei der eine Verstimmung der nominellen Einbaulage durch Wahl einer Abstufung dicker als die nominelle Einbaulage vorgenommen wurde. Bereich C zeigt eine Einstellscheibe bei der eine Verstimmung der nominellen Einbaulage durch Wahl zweier Abstufungen dicker als die nominelle Einbaulage vorgenommen wurde.

Die Wahl der Höhe der einzelnen Abstufungen ist grundsätzlich frei, wobei aus Wirtschaftlichkeitserwägungen heraus eine nicht zu feine Abstufung festgelegt werden sollte. Zudem sollte aus Festigkeitsgründen eine untere Miridestdicke nicht unterschritten werden sollte.

Die Kurve K1 gibt dabei den Lüftweg bei Wahl einer Einstellscheibe ohne verstimmen, d.h. ohne Änderung der aus Getriebe- und Betätigungssystemtoleranzen bestimmten Stärke der Einstellscheibe. Die Kurve K2 gibt den Lüftweg bei Wahl der Einstellscheiben mit den Stärkenabstufungen wieder, entsprechend den Bereichen A bis D.

Die Lüftwege der Kupplung wären dann dementsprechend klassifiziert. Jeder dieser Klassen wird eine gezielte Änderung der nominalen Einstellscheibestärke zugewiesen. Die zum gezielten Einstellen benötigten Informationen (Klassen) sind individuell auf der jeweiligen Doppelkupplung vermerkt, z. B. in Form eines Barcodes bzw. werden mit der Kupplung mitgeliefert. Diese Informationen werden bei der Montage der Komponenten ausgelesen (z. B. bei der Getriebemontage) und weiterverarbeitet, so dass die entsprechende Korrektur des Einstellmaßes vorgenommen werden kann.

Der vorliegende Prozess ermöglicht es, größere Toleranzen für Lüftwege in der Fertigung zu erlauben, da diese gezielt ausgeglichen werden können, indem die Kupplungstoleranzen individuell vermessen werden und auf der Kupplung so vermerkt werden, dass Zwischenstücke (Einstellscheiben) gezielt ausgewählt werden auf Basis von diesen auf der Kupplung vermerkten Informationen.

Vorstehend ist der vorliegende Einstellvorgang am Beispiel einer Doppelkupplung beschreiben. Der vorliegende Einstellvorgang ist jedoch nicht hierauf beschränkt. Vielmehr ist er auch auf Einfach-Kupplungen, sowohl Trocken als auch Nass, und auch auf Bremssysteme übertragbar. Ebenso ist er übertragbar auf Verschleißnachstellmechanismen oder Betätigungssysteme, die selbstständig die Einbaummaßtoleranzen ausgleichen. Auch dort kann ein entsprechendes Verstimmen einer jeweiligen Stärke vorgesehen werden.

## Patentansprüche

1. Verfahren zum Einbau einer Drehmomentübertragungseinrichtung in einem Antriebsstrang eines Fahrzeuges, wobei die Drehmomentübertragungseinrichtung eine motorseitige Baugruppe und eine getriebeseitige Baugruppe umfasst, und wobei eine geometrisch definierte Einbaulage der Drehmomentübertragungseinrichtung zwischen diesen Baugruppen durch Einlegen eines Ausgleichselementes, wie einer Einstellscheibe, bestimmter Stärke einstellbar ist,
mit folgenden Schritten:
Zusammenbau der Drehmomentübertragungseinrichtung,
Ermittlung eines Lüftweges der Drehmomentübertragungseinrichtung im zusammengebauten Zustand,
Bestimmung einer gewünschten Stärke des Ausgleichselementes in Abhängigkeit des ermittelten Lüftweges der Drehmomentübertragungseinrichtung im Vergleich zu einem gewünschten Lüftweg, und
Verbindung der Drehmomentübertragungseinrichtung mit einer Information über die derart festgelegte Stärke des Ausgleichselementes, insbesondere als Klartext oder codierte Beschriftung auf der Drehmomentübertragungseinrichtung,
wobei die Drehmomentübertragungseinrichtung als eine motorseitige Baugruppe und eine getriebeseitige Baugruppe getrennt an einen Hersteller des Fahrzeuges geliefert wird und der Hersteller des Fahrzeuges bei einem Zusammenbau der Drehmomentübertragungseinrichtung als Teil eines Antriebsstranges eines Fahrzeuges ein Ausgleichselement mit einer Stärke entsprechend der Information auf der jeweiligen Drehmomentübertragungseinrichtung bei der Montage verwendet.

2. Verfahren nach Anspruch 1, **dadurch gekennzeichnet, dass** ein Lüftweg der Drehmomentübertragungseinrichtung klassifiziert ist, wobei jeder dieser Klassen eine nominale Ausgleichelementstärke zugewiesen ist.

3. Verfahren nach einem der Ansprüche 1 oder 2, **dadurch gekennzeichnet, dass** die nominale Ausgleichselementstärke z. B. in Form eines Barcodes individuell auf der jeweiligen Drehmomentübertragungseinrichtung vermerkt wird oder mit der Drehmomentübertragungseinrichtung mitgeliefert wird.

4. Verfahren nach Anspruch 3, **dadurch gekennzeichnet, dass** die Information zur nominalen Ausgleichselementstärke bei der Montage der Drehmomentübertragungseinrichtung ausgelesen und weiterverarbeitet wird, sodass eine entsprechende Korrektur eines Lüftweges vorgenommen werden kann.

## Claims

1. Method for mounting a torque transmission device in a drive train of a vehicle, wherein the torque transmission device comprises an engine-side assembly and a transmission-side assembly, and wherein a geometrically defined mounting position of the torque transmission device between these assemblies can be adjusted by inserting a compensation element, such as an adjustment plate, of a specific thickness,
comprising the following steps:
assembly of the torque transmission device,
determination of a ventilation path of the torque transmission device in the assembled state,
determination of a desired thickness of the compensation element as a function of the determined ventilation path of the torque transmission device compared to a desired ventilation path, and
connection of the torque transmission device to an item of information about the thickness of the compensation element determined in such a way, in particular as plain text or encoded lettering on the torque transmission device,
wherein the torque transmission device is supplied separately as an engine-side assembly and a transmission-side assembly to a manufacturer of the vehicle, and the manufacturer of the vehicle, when manufacturing the torque transmission device as part of a drive train of a vehicle, uses a compensation element with a thickness corresponding to the information on the respective torque transmission device during mounting.

2. Method according to Claim 1, **characterized in that** a ventilation path of the torque transmission device is classified, wherein each of these classes is assigned in a nominal compensation element thickness.

3. Method according to one of Claims 1 or 2, **characterized in that** the nominal compensation element thickness is noted, for example in the form of a bar code, individually on the respective torque transmission device or is supplied along with the torque transmission device.

4. Method according to Claim 3, **characterized in that** the information relating to the nominal compensation element thickness is read out during the mounting of the torque transmission device and further processed with the result that corresponding correction of a ventilation path can be performed.

## Revendications

1. Procédé d'installation d'un dispositif de transfert de couple dans une chaîne cinématique d'un véhicule, le dispositif de transfert de couple comprenant un module du côté du moteur et un module du côté de la transmission, et une position d'installation définie géométriquement du dispositif de transfert de couple entre ces modules pouvant être ajustée par l'insertion d'un élément de compensation tel qu'une rondelle d'ajustement d'épaisseur déterminée,
comprenant les étapes suivantes :
assemblage du dispositif de transfert de couple,
détermination d'un entrefer du dispositif de transfert de couple dans l'état assemblé,
détermination d'une épaisseur souhaitée de l'élément de compensation en fonction de l'entrefer déterminé du dispositif de transfert de couple par comparaison avec un entrefer souhaité, et
connexion du dispositif de transfert de couple à une information concernant l'épaisseur ainsi déterminée de l'élément de compensation, en particulier sous forme de texte clair ou d'inscription codée sur le dispositif de transfert de couple,
le dispositif de transfert de couple étant fourni à un fabricant du véhicule sous forme séparée en tant que module du côté du moteur et module du côté de la transmission, et le fabricant du véhicule, lors d'un assemblage du dispositif de transfert de couple en tant que partie d'une chaîne cinématique d'un véhicule, utilisant un élément de compensation ayant une épaisseur correspondant à l'information sur le dispositif de transfert de couple respectif lors du montage.

2. Procédé selon la revendication 1, **caractérisé en ce qu'**un entrefer du dispositif de transfert de couple est classifié, à chacune de ces classes étant affectée une épaisseur nominale de l'élément de compensation.

3. Procédé selon l'une quelconque des revendications 1 ou 2, **caractérisé en ce que** l'épaisseur nominale de l'élément de compensation est notée par exemple sous la forme d'un code à barres individuellement sur le dispositif de transfert de couple respectif ou est fournie conjointement avec le dispositif de transfert de couple.

4. Procédé selon la revendication 3, **caractérisé en ce que** l'information relative à l'épaisseur nominale de l'élément de compensation est lue lors du montage du dispositif de transfert de couple et est traitée ultérieurement de telle sorte qu'une correction correspondante d'un entrefer puisse être effectuée.
